# EUROPEAN PATENT APPLICATION

(11) **EP 4 502 856 A1**
(43) Date of publication of application: **05.02.2025**
(21) Application number: 23780895.1
(22) Date of filing: 30.03.2023
(51) Int. Cl.: G06F 30/27

(54) **DESIGN ASSISTANCE SYSTEM AND DESIGN ASSISTANCE METHOD**

(30) Priority: 30.03.2022 JP 2022055243
(71) Applicant: Toppan Holdings Inc., Tokyo 110-0016 (JP)
(72) Inventor: UEDA Yoshihiro, Tokyo 110-0016 (JP); ASAI Makoto, Tokyo 110-0016 (JP); BAN Yusuke, Tokyo 110-0016 (JP); TOKUOKA Yoshihito, Tokyo 110-0016 (JP)
(74) Representative: Hoffmann Eitle
(86) International application number: PCT/JP2023/013212
(87) International publication number: WO 2023/190887

(57) **Abstract**

A first design assistance system 10 includes a first input/output management unit 20 configured to receive a product specification D1 and a first inference model 31 trained to output first design information D3 that fulfills the product specification D1. The first design assistance system 10 includes a first design information output unit 30 configured to output the first design information D3 from the product specification D1 by inputting an input specification D2 that is the product specification D1 accepted by the first input/output management unit 20 to the first inference model 31. This allows the first design assistance system 10 to use a past product design for product design that fulfills a product specification of interest.

## Description

### Technical Field

The present disclosure relates to a design assistance system and a design assistance method that each assist in product design.

### Background Art

A design assistance system has been known that retrieves, from a product specification that is a specification required for a product prior to design, past design information that fulfills the product specification.

A first example of the design assistance system compares the value of a specification item in a product specification and the value of a specification item in a past product specification. The design assistance system sets the similarity between the product specification of interest and the past product specification on the basis of the total number of specification items that match each other in the comparisons.

A second example of the design assistance system includes, as a rule, knowledge for retrieving past design information from the product specification of interest. When selecting a rule that fulfills the product specification of interest, the design assistance system takes into consideration a product design constraint or interference between one specification item and another specification item. The design assistance system retrieves past design information that fulfills the product specification of interest with reference to the rule selected for the product design (see, for example, PTL 1).

### Citation List

### Patent Literature

[PTL 1] JP H7-219989 A

### Summary of the Invention

### Technical Problem

Meanwhile, the retrieval of a past product design described above requires past design information to be standardized for retrieval to allow the values of specification items to be retrieved whether the first example in which the values of specification items are compared or the second example in which a rule selected for product design is referred to. In addition, when a new design item is added to a product coming after the product of interest, the standardization is also required to be updated whenever a product design is made.

### Solution to Problem

A design assistance system for solving the problem is a design assistance system that sets design information about a product to fulfill a product specification. The product specification is a requirement of the product. The design assistance system includes: an input processing unit configured to input the product specification; and a design information output unit including an inference model that is trained to output the design information which fulfills the product specification from the product specification. The design information output unit is configured to output the design information from the product specification inputted by the input processing unit by inputting the product specification inputted by the input processing unit to the inference model.

A design assistance method for solving the problem is a method for a design assistance system to set design information about a product to fulfill a product specification. The product specification is a requirement for the product. The design assistance system includes an inference model that is trained to output the design information which fulfills the product specification from the product specification. The design assistance method includes outputting the design information from the product specification inputted by an input processing unit by inputting the product specification inputted from the input processing unit to the inference model.

The design information in the design assistance system may include a constituent element of the product.

The constituent element of the product of the design assistance system may be at least one constituent element selected from a group of a structure of the product, a material of the product, a manufacturing method of the product, and a drawing of the product.

The product specification of the design assistance system may include an environmental index of the product.

The design information described above is, for example, information for setting a manufacturing method in product design. **In** addition, the design information may be, for example, information for setting a structure or a drawing in structural design. **In** addition, the environmental index described above is the extent of an environmental burden or the extent of consideration for environmental conservation.

Design information indicating a constituent element of a product such as the manufacturing method, the production resources, the structure, the material, or the drawing of the product is correlated to a product specification that is fulfilled by the constituent element. For example, a manufacturing method that is one of constituent elements is correlated to the dimensional accuracy of a product or an environmental index in manufacturing a product that is fulfilled by the manufacturing method. The correlation between a constituent element of a product and a product specification that is fulfilled by the constituent element makes it possible to construct an inference model having a product specification as an input and having a constituent element that fulfills the product specification as an output. For example, it is possible to construct an inference model that has the dimensional accuracy or the environmental index of a product as an input and outputs a manufacturing method that fulfills the dimensional accuracy.

A product group such as the model type or the model name of products into which a plurality of products is grouped is correlated to a product specification common to the respective products belonging to the product group. For example, a high-definition series that is one of product groups is correlated to the definition common to the respective products in the high-definition series. The correlation between a product group into which a plurality of products is grouped and a product specification common to the respective products makes it possible to construct an inference model having a product specification as an input and having a product group that fulfills the product specification as an output. For example, it is possible to construct an inference model that has the definition of products as an input and outputs a product group which achieves the definition.

In this regard, the inference model described above is configured to output, from a product specification, design information that fulfills the product specification on the basis of the correlation between the design information and the product specification.

This causes the design assistance system according to each of the configurations to output, from a product specification inputted by the input processing unit, design information that fulfills the product specification. As a result, a variety of past product designs are usable to output design information that fulfills the product specification of interest. In particular, among constituent elements of a product, a constituent element such as a structure, a material, a manufacturing method, or a drawing is beneficial as knowledge for making a new product design. The design assistance system that outputs a structure, a material, a manufacturing method, a drawing, or the like as a constituent element which fulfills a product specification therefore makes it possible to assist in product design that fulfills the product specification of interest more preferably.

In the design assistance system, the constituent element of the product may be a first constituent element. A database may be configured to store a second constituent element of the product in association with design identification information. The design information may include the first constituent element and the design identification information. The design identification information may include an attribute of the second constituent element associated with the design identification information. The design assistance system may further include a retrieval processing unit configured to retrieve, from the database, the second constituent element associated with the design identification information outputted by the design information output unit.

In the design assistance system, a database may be configured to store constituent elements of the product in association with design identification information. The design information may include the design identification information. The design identification information may include attributes of the constituent elements associated with the design identification information. The design assistance system may further include a retrieval processing unit configured to retrieve, from the database, constituent elements associated with the design identification information outputted by the design information output unit.

In the design assistance system, attributes of the constituent element may include product identification information for a manufacturer to identify the product including the constituent element.

A variety of product designs such as functional design, structural design, and manufacturing design set a variety of constituent elements of a product. At this time, all the constituent elements are newly generated in some cases, and only some of the constituent elements are newly generated and past constituent elements are adoptable for the other constituent elements in other cases. For example, a constituent element such as a manufacturing method or a material may be newly generated to fulfill the product specification of interest. Meanwhile, a past constituent element is adoptable in some cases as a constituent element such as a structure or a model type to fulfill the product specification of interest. Further, when almost the whole of the product specification of interest is similar to a past product specification, all the constituent elements presented as design assistance are similar to past constituent elements in some cases.

In this regard, the design assistance system described above outputs design identification information as design information. The design identification information is associated with a constituent element of a product in a database and has an attribute of the constituent element. For example, a product name for a manufacturer to identify a product or a series name for a manufacturer to identify a product group having common performance is included in the design identification information as an attribute of the constituent element.

This causes the design assistance system according to each of the configurations to effectively use a variety of past product designs. In addition, the design assistance system according to each of the configurations reduces a processing load necessary for assistance as compared with that of assistance that newly generates all constituent elements.

In the design assistance system, the database may be connected to the retrieval processing unit and does not have to be connected to the input processing unit. The retrieval processing unit may be a device different from the design information output unit.

According to the design assistance system, the retrieval processing unit that is directly connected to the database and the input processing unit that inputs the product specification are different devices. This connects an external terminal that applies for design assistance to the input processing unit that is unconnectable to the database directly and connects the retrieval processing unit that is connected to the input processing unit to the database. This prevents the external terminal that applies for design assistance from being directly connected to the database. As a result, it is possible to prevent information stored in the database from being leaked.

### Advantageous Effects of the Invention

A design assistance system and a design assistance method according to the present disclosure each make it possible to use a variety of past product designs for product design that fulfills the product specification of interest.

### Brief Description of the Drawings

FIG. 1 is a configuration diagram illustrating a design assistance system.
FIG. 2 is a configuration diagram illustrating an example of a product specification.
FIG. 3 is a configuration diagram illustrating an example of design identification information.
FIG. 4 is a configuration diagram illustrating a configuration of design information.
FIG. 5 is a configuration diagram illustrating a design assistance system according to a modification example 1.
FIG. 6 is a configuration diagram illustrating a design assistance system according to a modification example 2.
FIG. 7 is a configuration diagram illustrating a design assistance system according to a modification example 3.
FIG. 8 is a configuration diagram illustrating a design assistance system according to a modification example 4.

### Description of the Embodiments

### [First Embodiment]

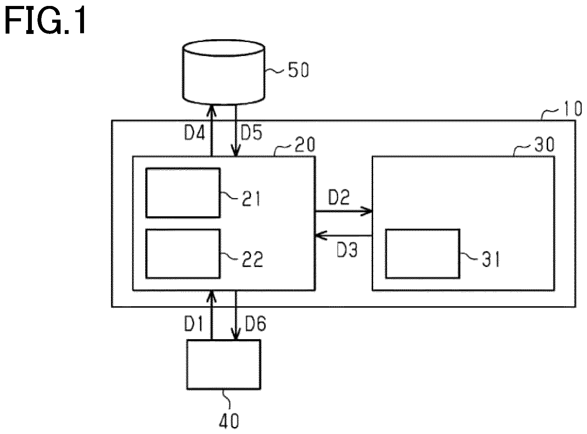

A first embodiment of a first design assistance system 10 and a design assistance method that is executed by the system will be described with reference to FIGS. 1 to 4. First, a configuration of the first design assistance system 10 will be described. Next, a product specification D1 that is inputted to the first design assistance system 10 and design assistance information D6 that is outputted by the first design assistance system 10 will be described. The first design assistance system 10 and the design assistance method according to the first embodiment each output, as the design assistance information D6, a constituent element D5 of a product similar to a product which fulfills the product specification D1.

### [Overview of System]

The first design assistance system 10 sets first design information D3 about a product on the basis of the product specification D1 to fulfill the product specification D1. The product specification D1 is requirements to a product prior to design. The first design information D3 about a product is information for advancing product design. The first design information D3 according to the first embodiment is design identification information (that will also be referred to as a design ID) associated with the constituent element D5 of a product. The design ID has an attribute of the constituent element D5 associated with the design ID.

The product may be a physical product, a service product, or a combination of a physical product and a service product. The physical product may be something that occupies a space, or energy such as heat, electricity, sound, or light. The service product may be the provision of communication, the provision of education, the provision of freight, the provision of transportation, or the provision of finance.

The product design is steps that are advanced on the basis of the product specification D1 before the product is manufactured. The product design is setting the constituent element D5 included in the product. An example of the product design starts with conceptual design that extracts a group of requirements for the product. The example of the product design includes functional design that implements the group of requirements to the product as functions to set the structure or the material of the product. The example of the product design includes structural design that implements the functions of the product as the structure of the product to set the manufacturing method of the product or the production resources of the product, and material design that implements the functions of the product as the material of the product. The example of the product design includes manufacturing design for manufacturing the product.

In a case where the product specification D1 is a result of the conceptual design, the product design may be the functional design, the structural design of the product, the material design of the product, the logical design of the product, or the manufacturing design of the product subsequent to the conceptual design. In a case where the product specification D1 is a result of the functional design, the product design may be the logical design, the structural design of the product, the material design of the product, or the manufacturing design of the product subsequent to the functional design. In a case where the product specification D1 is a result of the structural design or a result of the material design, the product design may be the manufacturing design of the product. In a case where the product specification D1 is a result of the logical design, the product design may be physical design subsequent to the logical design.

The constituent element D5 of a product may be the constituent element D5 in units of products in the product design or the constituent element D5 in units of parts in the product design.

The constituent element D5 of a product may be a functional element used for the functional design or a structural element used for the structural design. The constituent element D5 of a product may be a material element used for the material design or a manufacturing element used for the manufacturing design. The constituent element D5 of a product may be a logical element used for the logical design or knowledge in which the other constituent elements D5 of a plurality of products are grouped.

The functional element of a product may be a physical element such as resolution or thermal conductivity, or a chemical element such as waterproofness or responsiveness. The functional element of a product may be a mechanical element such as operability or a product size, or an electrical element such as extensibility or processing speed. The functional element of a product may be a management element such as safety or maintainability, or a sales element such as a price or the number of products.

The structural element of a product may be a structural element such as product dimensions or a product shape, or a correlative element such as disposition or connection. The material element of a product constituent material may be a compositional element such as a material name or a compounding ratio, or a dimensional element such as a particle or a fiber. The manufacturing element of a product may be a manufacturing method, production resources, or the order of steps. An example of the manufacturing method includes a line method in which products are processed in units of lines, an individual method in which products are manufactured in units of orders, and a lot method in which products are manufactured in units of lots. The knowledge in which the constituent elements D5 of a plurality of products are grouped is a model type such as the series name or the group name of the products.

An attribute of the constituent element D5 of a product is a property or a feature of the constituent element D5.

An attribute of the functional element may be the type of resolution, the type of operability, or the type of extensibility. An attribute of the structural element may be the type of a product size, the type of product weight, or the model type of a product shape. An attribute of the material element may be the type of a material, the model type of a material, or the type of a compounding ratio. An attribute of the manufacturing element may be the type of production resources or the type of a manufacturing method.

### [System Configuration]

As illustrated in FIG. 1, the first design assistance system 10 accepts the product specification D1 from the specification input terminal 40. The product specification D1 is the specification of a product that is requested from a product prior to design. The first design assistance system 10 confirms the product specification D1 accepted by the first design assistance system 10.

The first design assistance system 10 outputs the first design information D3 on the basis of an input specification D2 that is the confirmed product specification D1. The first design assistance system 10 sets the first design information D3 about the product to fulfill the input specification D2. The first design information D3 is a design ID associated with the constituent element D5 of the product in a first design database 50.

The first design assistance system 10 sets the outputted first design information D3 as a first retrieval key D4. The first design assistance system 10 finds out the constituent element D5 that matches the first retrieval key D4 among the constituent elements D5 of products stored in the first design database 50. The first design assistance system 10 outputs the design assistance information D6 including the found constituent element D5 to the specification input terminal 40.

The first design assistance system 10 includes a first input/output management unit 20 and a first design information output unit 30. The first input/output management unit 20 and the first design information output unit 30 are different devices configured to be capable of communicating with each other.

The first input/output management unit 20 includes a front-end module. The front-end module causes the first input/output management unit 20 to function as a first input processing unit 21 and a first output processing unit 22. The first design information output unit 30 includes a back-end module. The back-end module includes a first inference model 31.

### [First Input/output Management Unit 20]

The first input processing unit 21 accepts the input of the product specification D1 from the specification input terminal 40. The first input processing unit 21 determines whether it is possible to relay the product specification D1. The first input processing unit 21 determines the product specification D1 that matches a predetermined format as being allowed to be relayed. The first input processing unit 21 determines the product specification D1 that does not match the predetermined format as being prohibited from being relayed.

In a case where it is possible to relay the product specification D1 to the first design information output unit 30, the first input processing unit 21 inputs the product specification D1 to the first design information output unit 30 as the input specification D2. In a case where it is not possible to relay the product specification D1 to the first design information output unit 30, the first input processing unit 21 notifies the specification input terminal 40 that the product specification D1 has a defect.

The product specification D1 may be one input value related to one specification item or the input value of each of two or more specification items related to the specification item. The input value of the product specification D1 may be a character string, a table, or a combination of a character string and a table. The character string included in the product specification D1 is a structured language in which a specification item and the requirements related to the specification item are expressed as a pair.

A specification item of the product specification D1 may include a conceptual item required from a product prior to design or a structural item required from the structural element of a product prior to design. A specification item of the product specification D1 may include a material item required from the material element of a product prior to design or a manufacturing item required from the manufacturing element of a product prior to design. A specification item of the product specification D1 may include a logical item required from the logical element of a product prior to design or a product group item required from a product prior to design. The product group item is knowledge in which a plurality of products is grouped.

In a case where the product specification D1 is the specification of a physical product, a specification item of the product specification D1 may include the dimensions, the quality, the structure, the material, or the manufacturing method required from a product prior to design. In a case where the product specification D1 is the specification of a physical product, specification items of the product specification D1 may include the dimensions, the production quantity and the price required from a product prior to design.

In a case where the product specification D1 is the specification of a physical product, a specification item of the product specification D1 may include the environmental index required from a product prior to design. The environmental index is the extent of an environmental burden or the extent of consideration for environmental conservation. The input value of the environmental index may be a character string such as an environment, the amount of biological resources, reuse, or recycle, a numerical value indicating the extent of an environmental burden, or a numerical value indicating the extent of consideration for environmental conservation. The input value of the environmental index may be the amount of used chemical substances such as plastic or rubber, the additive amount of water resources such as clean water or industrial water, the volume of water discharged to a drainage destination such as a public water area or a sewer, or a water quality value such as the chemical oxygen demand or the biochemical oxygen demand.

The environmental index of a product may be applied to at least one of the scenes of manufacturing the product, transporting or selling the product, using the product, discarding the product, and reusing the product. In a case where the environmental index is a numerical value, the input value of the environmental index may be the numerical value of the environmental burden of a past product or a deviation value obtained by using the numerical value of consideration for environmental conservation by a past product as a population. **In** a case where the environmental index is a deviation value, the input value of the environmental index may be a deviation value calculated for each of the scenes to which the environmental index is applied.

The input value of the environmental index of a product may be the carbon dioxide emissions or the extent of the emissions in the period from the manufacturing start of a material that is the raw material of the product or the manufacturing start of the product to the completion of disposal or the completion of collection of the product. The input value of the environmental index of a product may be the evaluation score of the environmental burden in the period from the manufacturing start of a material that is the raw material of the product or the manufacturing start of the product to the completion of disposal or the completion of collection of the product, an evaluation score related to consideration for environmental conservation, or the criterion for the evaluation score.

The input value of the environmental index in the scene of manufacturing a product may be the extent to which the structure of the product is simplified, the amount of the material and the amount of the renewable material used for the product, or the extents of the amounts of these used materials. The input value of the environmental index in the scene of manufacturing a product may be the carbon dioxide emissions in a step of manufacturing the product, the adoptability of a manufacturing step with less carbon dioxide emissions, or the number of adopted manufacturing steps with reduced carbon dioxide emissions. The input value of the environmental index in the scene of manufacturing a product may be the amount of renewable energy used in a step of manufacturing the product, the adoptability of a manufacturing step that uses renewable energy, or the number of adopted manufacturing steps that use renewable energy.

The input value of the environmental index in the scene of transporting or selling a product may be the weight or the size of a container in which the product is put, the degree of load efficiency for transportation, or the degree to which promotional items are reduced. The input value of the environmental index in the scene of using a product may be the consumption period or the shelf life of the product or the degree to which the consumption period or the shelf life of the product is extended. The input values of the environmental indices in the scene of discarding a product and the scene of reusing a product may be the weight or the size of waste generated after the use of the product and the amount of the renewable material used for waste.

In a case where the product specification D1 is the specification of a service product, a specification item of the product specification D1 may include the cooperation form or the extension form required from a product prior to design. In a case where the product specification D1 is the specification of a service product, specification items of the product specification D1 may include the dimensions, the quality, the support form, and the price required from a product prior to design.

In a case where the product specification D1 is the specification of a service product, a specification item of the product specification D1 may include the environmental index required from a product prior to design. The input value of the environmental index of a service product may be the degree to which promotional items for the service product are reduced or may pertain to whether a mechanism with less carbon dioxide emissions is introduced to provide the service product. The input value of the environmental index of a service product may pertain to whether a recycle mechanism is introduced to the service product or whether a reuse mechanism is introduced to the service product.

The confirmation of the product specification D1 by the first input processing unit 21 may be confirming that a necessary item is included in the product specification D1. The confirmation by the first input processing unit 21 may be confirming that the range of an input value, the model type, the character type, and the number of characters in the product specification D1 are within a predetermined range, a predetermined model type, a predetermined character type, and a predetermined number of characters. The confirmation of the product specification D1 by the first input processing unit 21 may be confirming that an input value of the product specification D1 is not a value which harms security. The confirmation of the product specification D1 by the first input processing unit 21 may be confirming that the size of an image included in the product specification D1 falls within a predetermined range or that the size of diagram data included in the product specification D1 falls within a predetermined range.

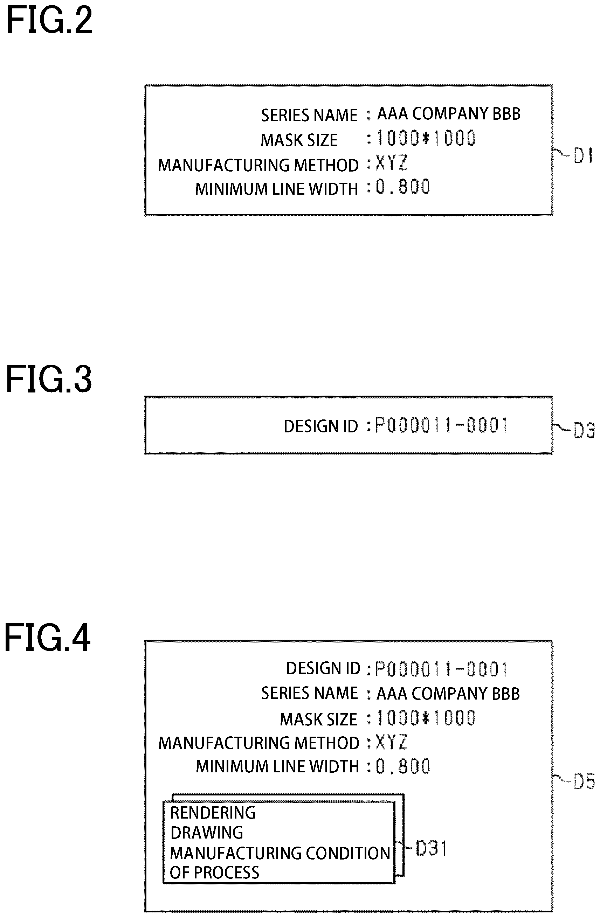

FIG. 2 illustrates an example of the product specification D1 in which product design is the manufacturing design of an exposure mask.

As illustrated in FIG. 2, the example of the product specification D1 includes a character string "AAA company BBB" that is the series name of the exposure mask as the series name that is a product group item. That is, the example of the product specification D1 requires the constituent element D5 that fulfills other requirements to be outputted in the manufacturing design of an exposure mask from the constituent elements D5 belonging to the group of "AAA company BBB" or the constituent elements D5 similar to the constituent elements D5.

In addition, the example of the product specification D1 includes an input value "1000*1000" for a mask size that is a structural item. In addition, the example of the product specification D1 includes a character string "XYZ" for a manufacturing method that is a manufacturing item. Further, the example of the product specification D1 includes an input value "0.800" for a minimum line width that is a structural item. That is, the example of the product specification D1 requires the constituent element D5 that fulfills the mask size of "1000*1000", the manufacturing method of "XYZ", and the minimum line width of "0.800" to be outputted in the manufacturing design of an exposure mask.

The confirmation of the product specification D1 of an exposure mask by the first input processing unit 21 includes confirming that the product specification D1 includes a series name, a mask size, a manufacturing method, and a minimum line width. The confirmation of the product specification D1 by the first input processing unit 21 includes confirming that the model type of the series name is a predetermined model type and that the input value of the mask size falls within a predetermined range. In addition, the confirmation of the product specification D1 by the first input processing unit 21 includes confirming that the character type and the number of characters of the manufacturing method are a predetermined character type and a predetermined number of characters. Further, the confirmation of the product specification D1 by the first input processing unit 21 includes confirming that the input value of the minimum line width falls within a predetermined range.

The first design database 50 stores, for a plurality of products, the constituent elements D5 of the respective products. The first design database 50 stores the one or more constituent elements D5 included in the products in association with the design IDs of the products. The product identified by the constituent element D5 associated with one design ID is different from the product identified by the constituent element D5 associated with another design ID.

The first design database 50 may include a plurality of memories included in a single storage device or distributed memories separately included in a plurality of storage devices. In a case where the first design database 50 includes a plurality of storage devices, the first design database 50 may have a function of integrating retrievals in the plurality of storage devices.

In a case where the constituent element D5 is a functional element, the constituent element D5 may be the design value of resolution or the design value of thermal conductivity. In a case where the constituent element D5 is a functional element, the constituent element D5 may be the design value of a product size or the design value of processing speed. In a case where the constituent element D5 is a functional element, the constituent element D5 may be the design level of safety or the design form of maintenance. In a case where constituent element D5 is a functional element, the constituent element D5 may be the level of a burden that a product itself lays on the environment or the level of consideration for environmental conservation by a product itself.

In a case where the constituent element D5 is a structural element, the constituent element D5 may be the design value or the design range of product dimensions or the design form of part connection. In a case where the constituent element D5 is a structural element, the constituent element D5 may be a design drawing of a product or a design drawing of a part. In a case where the constituent element D5 is a material element, the constituent element D5 may be the design name of a product constituent material or the compounding ratio of a product constituent material. In a case where the constituent element D5 is a sales element, the constituent element D5 may be a product price or a quantity indicating product production efficiency. In a case where the constituent element D5 is a material element, the constituent element D5 may be the design name of a product constituent material with a reduced environmental burden or the design name of a product constituent material that takes environmental conservation into consideration. In a case where the constituent element D5 is a material element, the constituent element D5 may be a numerical value that expresses the extent of a burden that a product constituent material places on the environment or a numerical value that expresses the extent of consideration for environmental conservation by a product constituent material.

In a case where the constituent element D5 is a manufacturing element, the constituent element D5 may be the design name of a manufacturing method, or the order of steps or the design order. In a case where the constituent element D5 is knowledge in which the other constituent elements D5 are grouped, the constituent element D5 may be the series name of products or the group name of products. In the case where the constituent element D5 is a manufacturing element, the constituent element D5 may be the design name of a manufacturing method in which an environmental burden is reduced, the design name of a manufacturing method in which environmental conservation is taken into consideration, or the order of steps or the design order. In addition, in a case where the constituent element D5 is a manufacturing element, the constituent element D5 may be a numerical value that expresses the extent of a burden that a manufacturing method lays on the environment or a numerical value that expresses the extent of consideration for environmental conservation by a manufacturing method.

The first output processing unit 22 retrieves the constituent element D5 associated with a design ID that is the first design information D3 among the constituent elements D5 stored in the first design database 50. The first output processing unit 22 outputs the constituent element D5 that is a retrieval result to the specification input terminal 40 as the design assistance information D6 to be read by the specification input terminal 40. The design assistance information D6 includes the constituent element D5 associated with the first design information D3. The design assistance information D6 may include a product design drawing that is the constituent element D5 associated with the first design information D3.

The first input/output management unit 20 includes an electronic circuit such as a CPU, an MPU, or a GPU. The first input/output management unit 20 includes a storage such as an SSD or an HDD. The first input/output management unit 20 includes a memory such as a ROM, a RAM, a registered memory, or an un-buffered memory. The first input/output management unit 20 may include an integrated circuit such as an ASIC or an FPGA. The whole of processing to be executed by the first input/output management unit 20 may be executed by software included in the first input/output management unit 20 or achieved by a combination of an integrated circuit and software included in the first input/output management unit 20. In addition, the first input/output management unit 20 may include a multi-computer including a plurality of computers. A computer included in the first input/output management unit 20 may be a classic computer or a quantum computer such as a virtual machine virtually constructed by software.

### [First Design Information Output Unit 30]

The first design information output unit 30 outputs the first design information D3 on the basis of the input specification D2 that is the product specification D1 confirmed by the first input processing unit 21. The first design information output unit 30 includes the first inference model 31. The first inference model 31 is a machine learning model that has the input specification D2 as an input and is trained to output the first design information D3 of a product to fulfill the input specification D2.

The first inference model 31 may be a regression analysis model, a support vector machine, a k-approximation model, random forests, or a deep learning model. Learning for constructing the first inference model 31 may be supervised learning, unsupervised learning, or reinforcement learning. The algorithm of the first inference model 31 and the learning for constructing the first inference model 31 are selected as appropriate to increase the accuracy of a design ID outputted from the product specification D1. It is to be noted that the conventional classic computing based on the binary numeral system or quantum computing may be used to construct the first inference model 31.

The first design information output unit 30 inputs the input specification D2 to the first inference model 31 and sets the first design information D3 about a product to fulfill the input specification D2. As described above, the first design information D3 according to the first embodiment is a design ID associated with the constituent element D5 of the product in the first design database 50.

As described above, the first design information output unit 30 outputs the first design information D3 from the input specification D2. In the process of learning the first inference model 31, the first design information output unit 30 may convert the input of textual information such as text or non-numerical data such as a drawing to a numerical value. At this time, the first design information output unit 30 has an image recognition function of interpreting image information or a natural language processing function of interpreting a word or a wording.

In a case where the input specification D2 includes an input character string, the first inference model 31 targets the input character string included in the input specification D2 and performs morphological analysis and distributed representation conversion that are preprocessing. The morphological analysis includes dividing an input character string into morphemes and discriminating the articles or the like of the morphemes resulting from the division. The distributed representation conversion converts a discrimination result of a morpheme obtained from the morphological analysis to a numerical value that is a distributed representation. The first inference model 31 may perform structural analysis by targeting the distributed representation. The structural analysis may be the analysis of the modification structure of morphemes or the analysis of a phrasal structure.

In a case where the input specification D2 includes an image, the first inference model 31 performs re-scaling of adjusting the size of the image included in the input specification D2 as preprocessing for the image. In addition, the first inference model 31 may perform binarization or normalization for making prominent a significant feature value and dimensional compression or conversion to a histogram for removing an insignificant feature value as preprocessing for the image included in the input specification D2.

As described above, a design ID that is the first design information D3 includes an attribute of the constituent element D5 of a product. That is, the design ID indicates not only a serial number assigned to each design, but also an attribute of the constituent element D5 associated with the design ID. An attribute of the constituent element D5 such as the type of a manufacturing method, the type of production resources, the type of a product size, or the type of a material assigned at the time of past design is correlated to the product specification D1 fulfilled by the constituent element D5. A product group into which a plurality of products is grouped, that is, an attribute such as a model type or a model name is also correlated to the product specification D1 common to the respective products belonging to the product group.

For example, in manufacturing design, the type of a manufacturing method assigned in each kind of past design is correlated to the structural element or the functional element of a product fulfilled by the manufacturing method. For example, a high-definition series assigned as a product group in past manufacturing design is correlated to the demonstration of the high-definition performance common to the respective products in the high-definition series.

Such a correlation between an attribute of the constituent element D5 in a design ID and the product specification D1 fulfilled by the constituent element D5 makes it possible to construct the first inference model 31 having the product specification D1 as an input and a design ID for fulfilling the product specification D1 as an output. The design ID outputted by the first inference model 31 is a design ID associated with the past constituent element D5 generated to fulfill the product specification D1. The first inference model 31 is a model trained to output a design ID from the input specification D2 subjected to the preprocessing on the basis of the correlation between the product specification D1 and an attribute of the constituent element D5 included in the design ID.

The first inference model 31 may be a deep learning model including a neural network. The first inference model 31 includes an input layer, an intermediate layer, and an output layer. The neural network includes a plurality of intermediate layers each including a plurality of nodes and a plurality of edges. An activation function applied to an edge may be a ReLU (Rectified Linear Unit), a sigmoid function, or a hyperbolic tangent function.

In a case where the input specification D2 includes an input character string, the first inference model 31 may include a convolutional neural network (CNN). The first inference model 31 may include a recurrent neural network (RNN) or a bidirectional RNN. The first inference model 31 may include an encoder RNN that compresses an input character string and a decoder RNN that has an output of the encoder RNN as an input and outputs a character string. In a case where a recurrent neural network is adopted for the first inference model 31, an LSTM (Long Short Term Memory) may be included as a recurrent cell that adjusts the transfer of information between layers. In a case where a recurrent neural network is adopted for the first inference model 31, a gate GRU (Gate Recurrent Unit) may be included as a recurrent cell that adjusts the transfer of information between layers. In a case where the input specification D2 includes an image, the first inference model 31 may include a graph neural network (GNN).

It is to be noted that the first design assistance system 10 may also output information that allows a user to determine the validity of the first design information D3 like the relationship between the first design information D3 outputted by the first inference model 31 and the input specification D2, a specification item that influences the inference, or the like. At this time, the first design information output unit 30 may include the first inference model 31 configured to explain the influence ratio of the specification item from the first design information D3 that is an inference result or the first inference model 31 configured to quantify the contribution ratio of the specification item from the first design information D3 that is an inference result.

FIG. 3 illustrates an example of the first design information D3 in which product design is the manufacturing design of an exposure mask.

As illustrated in FIG. 3, the first design information D3 includes "P000011-0001" as a design ID. The design ID includes a character "P" for the model type of a product group that is an attribute of the constituent element D5. The design ID includes a character string "000011" for the type of a product constituent material that is an attribute of the constituent element D5. The design ID includes a character string "0001" for the type of the order of steps that is an attribute of the constituent element D5.

That is, in the manufacturing design of an exposure mask, the first inference model 31 first receives a series name "AAA company BBB" of a product, a mask size "1000*1000", a manufacturing method "XYZ", and a minimum line width "0.800" as requirements. The first inference model 31 outputs, as the model type of a product group that fulfills these requirements, "P" that is an attribute of the model type. "P" that is an attribute of the model type is an example of product identification information and is assigned to an exposure mask of "AAA company". In addition, the first inference model 31 outputs, as the type of a product constituent material that fulfills the requirements, "000011" that is an attribute of the type. The first inference model 31 outputs, as the type of a manufacturing method that fulfills the requirements, a character string "0001" that is an attribute of the type. It is to be noted that a low-dimensional input of four dimensions including a series name, a mask size, a manufacturing method, and a minimum line width is shown in the example described above for convenience of description. However, in general, the number of dimensions of a product specification necessary for the design of a product or a service reaches several tens of dimensions. The inference model according to this technology is also set as appropriate to have a high-dimensional input in accordance with the number of dimensions of the product specification.

FIG. 4 illustrates an example of the design assistance information D6 in the manufacturing design of an exposure mask.

As illustrated in FIG. 4, the design assistance information D6 includes a character string "P000011-0001" that is a design ID associated with the constituent element D5 included in the design assistance information D6. The design ID included in the design assistance information D6 is a design ID outputted by the first inference model 31.

In addition, the design assistance information D6 includes a character string "AAA company BBC" for a series name that is a product group item found out by using the design ID as the first retrieval key D4. In addition, the design assistance information D6 includes a design value "1000*1000" for a mask size that is a found structural item. In addition, the design assistance information D6 includes a character string "XYZ" for the design format of a found manufacturing method. Further, the design assistance information D6 includes a design value "0.800" for a found minimum line width. The design assistance information D6 then includes a rendering and a drawing indicating these constituent elements D5 and a manufacturing condition for achieving these constituent elements D5 as found supplementary information D31.

That is, the first design assistance system 10 accepts a series name "AAA company BBB", a mask size "1000*1000", a manufacturing method "XYZ", and a minimum line width "0.800" as requirements of the manufacturing design. The first design assistance system 10 outputs a series name "AAA company BBC" similar to the series name of the product specification D1 as the constituent element D5 that fulfills the requirements of the manufacturing design. In addition, the first design assistance system 10 outputs the mask size, the manufacturing method, and the minimum line width of an exposure mask manufactured on the basis of the supplementary information D31. At this time, the first design assistance system 10 may have a function of adding the ground for the presentation of the design assistance information D6 that is a presentation result to the supplementary information D31 like the ground for the inference of the first inference model 31.

This allows the first design assistance system 10 to provide it as knowledge that the manufacturing design which fulfills the product specification D1 is not the series name "AAA company BBB", but the series name "AAA company BBC". It is possible for the first design assistance system 10 to provide it as knowledge that it is possible to achieve the mask size, the manufacturing method, and the minimum line width which fulfill the product specification D1 according to the manufacturing design based on the supplementary information D31 in the series name "AAA company BBC".

The first design information output unit 30 includes an electronic circuit such as a CPU, an MPU, a GPU, or a TPU (Tensor Processing Unit). The first design information output unit 30 includes a storage such as an SSD or an HDD. The first design information output unit 30 includes a memory such as a ROM, a RAM, a registered memory, or an un-buffered memory. The first design information output unit 30 may include an integrated circuit such as an ASIC or an FPGA. The whole of processing to be executed by the first design information output unit 30 may be executed by software included in the first design information output unit 30 or achieved by a combination of an integrated circuit and software included in the first design information output unit 30.

According to the first embodiment, effects listed below are obtained.

(1-1) The first design assistance system 10 outputs a design ID that fulfills the product specification D1 from the input specification D2 inputted by the first input processing unit 21. As a result, a variety of past product designs are usable to output the first design information D3 that fulfills the product specifications D1 of interest.

(1-2) Among the constituent elements D5 of a product, the constituent element D5 such as a structure, a material, a manufacturing method, or a drawing is particularly beneficial as knowledge for making a new product design such as a structural design, a material design, or a manufacturing design. The first design assistance system 10 that outputs a structure, a material, a manufacturing method, a drawing, or the like as the constituent element D5 which fulfills the product specifications D1 along with the supplementary information D31 therefore makes it possible to assist in product design that fulfills the product specifications D1 of interest more preferably.

(1-3) The first design assistance system 10 outputs a design ID that is an example of the design identification information as the first design information D3. The design ID is associated with the constituent element D5 of a product in the first design database 50 and has an attribute of the constituent element D5. For example, a product name for a manufacturer to identify a product or a series name for a manufacturer to identify a product group having common performance is included in the design ID as an attribute of the constituent element D5. This reduces a processing load necessary for assistance as compared with that of product design that newly generates all the constituent elements D5.

(1-4) The first design assistance system 10 additively outputs the ground for the presentation of the design assistance information D6 by the first design assistance system 10 and it is thus possible for a user to appropriately determine the validity of the design assistance information D6.

### [Second Embodiment]

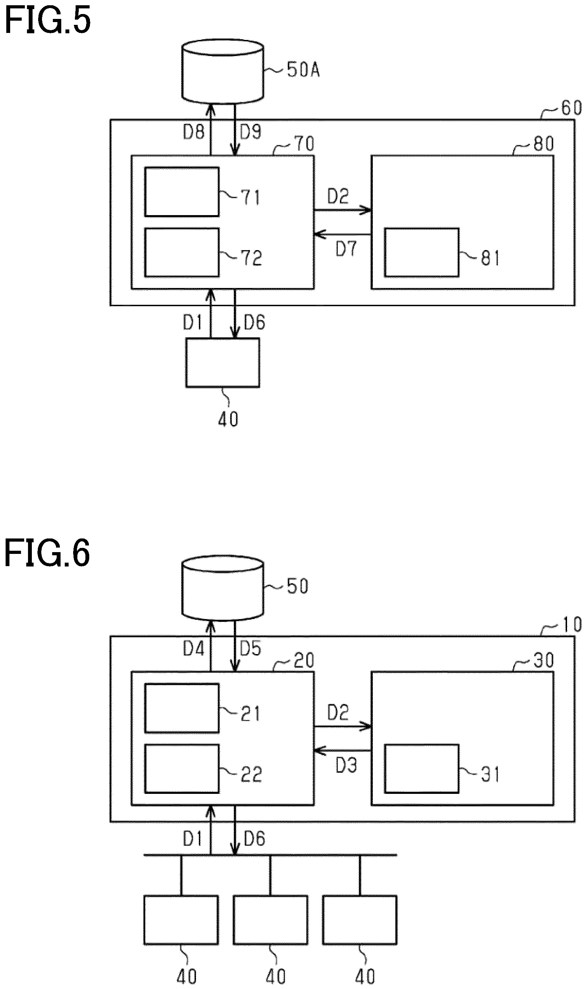

A second embodiment of a second design assistance system 60 and a design assistance method that is executed by the system will be described with reference to FIG. 5. First, a configuration of the second design assistance system 60 will be described and the design assistance information D6 that is outputted by the second design assistance system 60 will be described. It is to be noted that the second design assistance system 60 includes a second inference model 81 different from that of the first embodiment. In addition, the second design assistance system 60 generates a new constituent element of a product that fulfills the product specification D1. The second design assistance system 60 then puts the generated new constituent element in the first design information D3. Different points of the second design assistance system 60 and a design assistance method that is executed by the system from the first design assistance system 10 and the design assistance method that is executed by the system will be chiefly described and duplicate description will be omitted below.

### [System Configuration]

As illustrated in FIG. 5, the second design assistance system 60 outputs second design information D7 on the basis of the input specification D2 that is the confirmed product specification D1. The second design assistance system 60 sets the second design information D7 about the product to fulfill the input specification D2. The second design information D7 includes a new constituent element of a product and a second retrieval key D8 that is a design ID. The new constituent element included in the second design information D7 is an example of the first constituent element. The design ID included in the second design information D7 is an example of the second constituent element.

The second design assistance system 60 finds out a preceding constituent element D9 that matches the second retrieval key D8 of the second design information D7. The second design assistance system 60 outputs the new constituent element of the product included in the second design information D7 and the preceding constituent element D9 that is a retrieval result to the specification input terminal 40 as the design assistance information D6.

The second design assistance system 60 includes a second input/output management unit 70 and a second design information output unit 80. The second input/output management unit 70 and the second design information output unit 80 are different devices configured to be capable of communicating with each other.

The second input/output management unit 70 includes a front-end module. The front-end module causes the second input/output management unit 70 to function as a second input processing unit 71 and a second output processing unit 72. The second design information output unit 80 includes a back-end module. The back-end module includes a second inference model 81.

The second input processing unit 71 accepts the input of the product specification D1 from the specification input terminal 40. The second input processing unit 71 determines whether it is possible to relay the product specification D1. In a case where it is possible to relay the product specification D1 to the second design information output unit 80, the second input processing unit 71 inputs the product specification D1 to the second design information output unit 80 as the input specification D2.

A second design database 50A stores, for a plurality of products, the preceding constituent elements D9 that are the constituent elements of the respective products. The second design database 50A stores the one or more preceding constituent elements D9 included in the products in association with the design IDs of the products. The product identified by the preceding constituent element D9 associated with one design ID is different from the product identified by the constituent element D5 associated with another design ID.

The second output processing unit 72 retrieves the preceding constituent element D9 associated with the second retrieval key D8 among the preceding constituent elements D9 stored in the second design database 50A. The second output processing unit 72 outputs the new constituent element included in the second design information D7 and the preceding constituent element D9 that is a retrieval result to the specification input terminal 40 as the design assistance information D6 to be read by the specification input terminal 40.

### [Second Design Information Output Unit 80]

The second design information output unit 80 outputs the second design information D7 on the basis of the input specification D2 that is the product specification D1 confirmed by the second input processing unit 71. The second design information output unit 80 includes the second inference model 81. The second inference model 81 is a machine learning model that has the input specification D2 as an input and is trained to output the second design information D7 of a product to fulfill the input specification D2.

The second inference model 81 may be a regression analysis model, a support vector machine, a k-approximation model, random forests, or a deep learning model. Learning for constructing the second inference model 81 may be supervised learning, unsupervised learning, or reinforcement learning. The algorithm of the second inference model 81 and the learning for constructing the second inference model 81 are selected as appropriate to increase the accuracy of a new constituent element and the accuracy of a design ID outputted from the product specification D1. It is to be noted that the conventional classic computing based on the binary numeral system or quantum computing may be used to construct the inference model.

The second design information output unit 80 applies the input specification D2 to the second inference model 81 and sets the second design information D7 about a product to fulfill the input specification D2. As described above, the second design information D7 according to the second embodiment is a new constituent element of the product and a design ID associated with the preceding constituent element D9 in the second design database 50A.

The new constituent element included in the second design information D7 is a constituent element generated by the second inference model 81. The new constituent element generated by the second inference model 81 may be a structural element with a functional design result used as the product specification D1 or a material element with a functional design result used as the product specification D1. The new constituent element generated by the second inference model 81 may be a manufacturing element with a structural design result used as the product specification D1.

A physical element such as resolution or thermal conductivity that is the product specification D1 is correlated to a structural element such as product dimensions or a product shape that fulfills the physical element. A physical element such as resolution or thermal conductivity that is the product specification D1 is correlated to a material element such as a product constituent material or a compounding ratio that fulfills the physical element. A structural element such as product dimensions or a product shape that is the product specification D1 is correlated to a manufacturing element such as a manufacturing method or production resources that fulfill the structural element. A material element such as a product constituent material or a compounding ratio that is the product specification D1 is correlated to a manufacturing element such as a manufacturing method or production resources that fulfill the material element. In a case where a specification item of the product specification D1 includes an environmental index, the input value of the environmental index is correlated to a structural element, a material element, and a manufacturing element that fulfill the input value.

Such a correlation between the product specification D1 and a constituent element of a product that fulfills the product specification D1 makes it possible to construct the second inference model 81 having the product specification D1 as an input and having a constituent element that fulfills the product specification D1 as an output. The second inference model 81 is a model trained to generate a new constituent element from the input specification D2 on the basis of the correlation between the product specification D1 and the constituent element D5 that fulfills the product specification D1.

The second design information D7 includes a design ID in addition to the new constituent element generated by the second inference model 81. The design ID included in the second design information D7 includes an attribute of the preceding constituent element D9. Among constituent elements of a product, the preceding constituent element D9 is a constituent element other than a constituent element newly generated to fulfill the product specification D1. For example, in structural design and material design subsequent to functional design, a constituent element of a product includes the design value of a product size, the structural diagram of a product, and the compounding ratio of a product constituent material. In this case, the second inference model 81 generates the design value of a product size and the compounding ratio of a product constituent material as new constituent elements and outputs a design ID associated with the structural diagram of the product.

An attribute included in the preceding constituent element D9 like a feature portion included in a structural diagram of a product, the disposition of a feature included in a step chart of a manufacturing method, feature processing included in a sequence chart of system processing, or the like is correlated to the product specification D1 fulfilled by the preceding constituent element D9. An attribute included in the preceding constituent element D9 like a group of correlated structural diagrams, a group of correlated step charts, a group of correlated sequence charts, or the like is also correlated to the product specification D1.

The correlation between an attribute of the preceding constituent element D9 in a design ID and the product specification D1 fulfilled by the preceding constituent element D9 makes it possible to construct the second inference model 81 having the product specification D1 as an input and a design ID for fulfilling the product specification D1 as an output. The second inference model 81 is a model trained to output a design ID from the input specification D2 subjected to the preprocessing on the basis of the correlation between the product specification D1 and an attribute of the preceding constituent element D9 included in the design ID.

As described above, the second design information output unit 80 outputs a new constituent element from the input specification D2. In the process of learning the second inference model 81, the second design information output unit 80 may convert the input of textual information such as text or what is not a numerical value such as a drawing to a numerical value. At this time, the second design information output unit 80 has an image recognition function of interpreting image information or a natural language processing function of interpreting a word or a wording.

In addition, the second design assistance system 60 may have a function of additively outputting the ground for the presentation of the design assistance information D6 that is a presentation result like the ground for the inference of a new constituent element by the second inference model 81.

In addition, the second design assistance system 60 may also output information that allows a user to determine the validity of the new constituent element like the relationship between the new constituent element outputted by the second inference model 81 and the input specification D2, a specification item that influences the inference, or the like. At this time, the second design information output unit 80 may include the second inference model 81 configured to explain the influence ratio of the specification item from the new constituent element that is an inference result or the second inference model 81 configured to quantify the contribution ratio of the specification item from the new constituent element that is an inference result.

As described above, according to the second embodiment, it is possible to obtain the following effects.

(2-1) The second design information output unit 80 generates a new constituent element of a product as the first design information D3 to fulfill the product specification D1. This allows the second design assistance system 60 to assist in providing a design value that is more suitable to the product specification D1 while using a past product design whether a design value that is slightly different from that of the preceding constituent element D9 or a design value that is considerably different from that of the preceding constituent element D9. In addition, the ground for the presentation of a new constituent element is additively outputted, thereby allowing a user to appropriately determine the validity of the new constituent element.

(2-2) A constituent element such as a manufacturing method or a material is required to be newly generated to fulfill the product specifications D1 of interest. Meanwhile, it is possible in some cases to divert the preceding constituent element D9 to a constituent element such as a structure or a model type to fulfill the product specifications D1 of interest. In this regard, the second design assistance system 60 outputs a design ID associated with the preceding constituent element D9 in addition to the new constituent element. As a result, the second design assistance system 60 reduces a processing load necessary for assistance as compared with that of assistance that newly generates all the constituent elements of a product that fulfill the product specification D1.

Additionally, it is possible to modify and carry out the embodiments as follows.
- As illustrated in FIG. 6, the first design assistance system 10 may be connected to the plurality of specification input terminals 40 different from each other via a network. The first design assistance system 10 may have a function of authenticating the connection to each of the specification input terminals 40.

At this time, the first design assistance system 10 may separately accept the inputs of the product specification D1 from the respective specification input terminals 40, or may accept the inputs of different specification items from the respective specification input terminals 40 and group the inputs of the respective specification items into the one product specification D1 for acceptance. For example, the first design assistance system 10 may accept a structural design result from the one specification input terminal 40 for the input of a specification item in manufacturing design and accept a material design result from the other specification input terminal 40 for the input of a specification item. The first design assistance system 10 may then accept the product specification D1 into which the structural design result and the material design result are grouped and output the first design information D3 that fulfills the product specification D1.

It is to be noted that the second design assistance system 60 may also be connected to the plurality of specification input terminals 40 different from each other via a network. The second design assistance system 60 may have a function of authenticating the connection to each of the specification input terminals 40. The second design assistance system 60 may separately accept the inputs of the product specification D1 from the respective specification input terminals 40, or may accept the inputs of different specification items from the respective specification input terminals 40 and group the inputs of the respective specification items into one product specification D1 for acceptance.

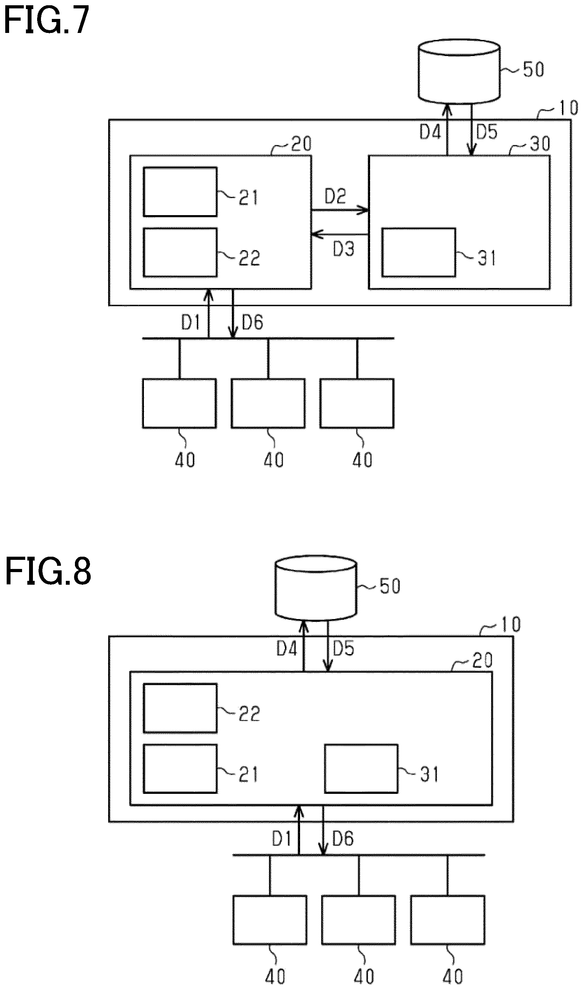

- As illustrated in FIG. 7, the first design database 50 is connected to the first design information output unit 30 that is an example of a retrieval processing unit and does not have to be connected to the first input/output management unit 20. At this time, the first design information output unit 30 is a device different from the first input/output management unit 20. The first design information output unit 30 sets the first design information D3 as the first retrieval key D4. The first design information output unit 30 finds a constituent element D5 that matches the first retrieval key D4 among the constituent elements D5 of products stored in the first design database 50. The first design information output unit 30 relays the found constituent element D5 to the first input/output management unit 20. The first input/output management unit 20 generates the design assistance information D6 including the relayed constituent element D5 and outputs the design assistance information D6 to the specification input terminal 40.

According to this configuration, the first design information output unit 30 directly connected to the first design database 50 and the first input/output management unit 20 that inputs the product specification D1 are different devices. An external terminal that applies for design assistance is therefore connected to the first input/output management unit 20 that is unconnectable to the first design database 50 and the first design information output unit 30 that is connected to the first input/output management unit 20 is connected to the first design database 50. As a result, it is possible to prevent the external terminal that applies for design assistance from being directly connected to the first design database 50 and prevent the constituent element D5 stored in the first design database 50 from being leaked.

It is to be noted that the second design database 50A is also connected to the second design information output unit 80 that is an example of the retrieval processing unit and does not have to be connected to the first input/output management unit 20 in the second design assistance system 60. At this time, the second design information output unit 80 is a device different from the second input/output management unit 70. The second design information output unit 80 sets the second design information D7 as the second retrieval key D8. The second design information output unit 80 finds out the preceding constituent element D9 that matches the second retrieval key D8 among the preceding constituent elements D9 of products stored in the second design database 50A. The second design information output unit 80 relays the found preceding constituent element D9 to the second input/output management unit 70. The second input/output management unit 70 generates the design assistance information D6 including the relayed preceding constituent element D9 and outputs the design assistance information D6 to the specification input terminal 40.

- As illustrated in FIG. 8, the first input/output management unit 20 of the first design assistance system 10 may include the first inference model 31 in addition to the first input processing unit 21 and the first output processing unit 22. The first input/output management unit 20 may have a function of the first design information output unit 30 as one device. The first design assistance system 10 may then omit the first design information output unit 30. At this time, the first design assistance system 10 may further include the first design database 50. That is, the first input/output management unit 20 and the first design information output unit 30 are not different devices, but may be one server device that is connected to the specification input terminal 40 or one server device further including the first design database 50.

The second input/output management unit 70 of the second design assistance system 60 may also include the second inference model 81 in addition to the second input processing unit 71 and the second output processing unit 72. The second input/output management unit 70 may have a function of the second design information output unit 80 as one device. The second design assistance system 60 may then omit the second design information output unit 80. At this time, the second design assistance system 60 may further include the second design database 50A. That is, the second input/output management unit 70 and the second design information output unit 80 are not different devices, but may be one server device that is connected to the specification input terminal 40 or one server device further including the second design database 50A.

- A character string included in the product specification D1 may be natural language described in a language form handled by a human. In a case where a character string included in the product specification D1 is natural language, the first input processing unit 21 or the second input processing unit 71 targets the character string included in the product specification D1 and executes morphological analysis and distributed representation conversion. In addition, the first input processing unit 21 or the second input processing unit 71 includes a learner that is trained through machine learning to output the input value of a specification item by using a result of the distributed representation conversion as an input.

### Reference Signs List

- 10: First design assistance system
- 20: First input/output management unit
- 21: First input processing unit
- 22: First output processing unit
- 30: First design information output unit
- 31: First inference model
- 40: Specification input terminal
- 50: First design database
- 50A: Second design database
- 60: Second design assistance system
- 70: Second input/output management unit
- 71: Second input processing unit
- 72: Second output processing unit
- 80: Second design information output unit
- 81: Second inference model

## Claims

1. A design assistance system that assists in product design to fulfill a product specification, the product specification being a requirement for a product, the product design setting design information about the product, the design assistance system comprising:
an input processing unit configured to input the product specification; and
a design information output unit including an inference model that is trained to output the design information which fulfills the product specification from the product specification, the design information output unit being configured to output the design information from the product specification inputted by the input processing unit by inputting the product specification inputted by the input processing unit to the inference model.

2. The design assistance system according to claim 1, wherein the design information includes a constituent element of the product.

3. The design assistance system according to claim 2, wherein the constituent element of the product is at least one constituent element selected from a group of a structure of the product, a material of the product, a manufacturing method of the product, and a drawing of the product.

4. The design assistance system according to claim 2 or 3, wherein
the constituent element of the product is a first constituent element,
a database is configured to store a second constituent element of the product in association with design identification information,
the design information includes the first constituent element and the design identification information,
the design identification information includes an attribute of the second constituent element associated with the design identification information, and
the design assistance system further comprises a retrieval processing unit configured to retrieve, from the database, the second constituent element associated with the design identification information outputted by the design information output unit.

5. The design assistance system according to claim 1, wherein the product specification includes an environmental index of the product.

6. The design assistance system according to claim 1, wherein
a database is configured to store a constituent element of the product in association with design identification information,
the design information includes the design identification information,
the design identification information includes an attribute of the constituent element associated with the design identification information, and
the design assistance system further comprises a retrieval processing unit configured to retrieve, from the database, the constituent element associated with the design identification information outputted by the design information output unit.

7. The design assistance system according to claim 6, wherein an attribute of the constituent element includes product identification information for a manufacturer to identify the product including the constituent element.

8. The design assistance system according to any one of claims 5 to 7, wherein
the database is connected to the retrieval processing unit and is not connected to the input processing unit, and
the retrieval processing unit is a device different from the input processing unit.

9. A design assistance method that is a method for a design assistance system to assist in product design to fulfill a product specification, the product specification being a requirement to a product, the product design setting design information about the product, the design assistance system including an inference model that is trained to output the design information which fulfills the product specification from the product specification, the design assistance method comprising
outputting the design information from the product specification inputted by an input processing unit by inputting the product specification inputted from the input processing unit to the inference model.
